Europäisches Patentamt

European Patent Office

Office européen des brevets

(11) Veröffentlichungsnummer: **0 253 769**
A2

## (12) EUROPÄISCHE PATENTANMELDUNG

(21) Anmeldenummer: 87810379.5

(22) Anmeldetag: **01.07.87**

(51) Int. Cl.⁴: **G 11 B 3/46**

(30) Priorität: 09.07.86 CH 2765/86

(43) Veröffentlichungstag der Anmeldung: **20.01.88**
**Patentblatt 88/3**

(84) Benannte Vertragsstaaten: **AT BE CH DE ES FR GB GR IT LI LU NL SE**

(71) Anmelder: **Gyger, Fritz, Jr., Reckholderweg 4c, CH-3645 Gwatt (CH)**

(72) Erfinder: **Gyger, Fritz, Jr., Reckholderweg 4c, CH-3645 Gwatt (CH)**

(74) Vertreter: **Kerr, Andrew, Postfach 122 Finkelerweg 44, CH-4144 Arlesheim BL (CH)**

(54) **Abtastnadel.**

(57) Eine Abtastnadel zur Abtastung von stereo- und quadrophonischen Tonrillen von Schallplatten weist eine durch ebene oder annähernd ebene Flächen gebildete Spitze auf, die einen gleichschenklig dreieckigen, trapezförmigen oder kreissegmentförmigen Querschnitt besitzt, wobei die Kanten einen Radius von 3-8 μm aufweisen. Die der Grundlinie der Querschnittsfläche entsprechende Fläche kann ebenfalls unter einem Winkel von vorzugsweise 20° Längsachse der Nadel geschliffen werden.

- 1 -

## Abtastnadel

Die Erfindung betrifft eine Abtastnadel zur Abtastung von stereo- und quadrophonischen Tonrillen von Schallplatten.

Es sind Tonabnehmer-Abtastnadeln bekannt, die eine im wesentlichen konische Spitze mit abgerundetem Scheitel aufweisen. Ausgehend von der konischen Grundform wurden Verbesserungen dadurch erzielt, dass der Konus zu mehr oder weniger elliptischen Querschnittsformen abgewandelt wurde. Schliesslich wurden noch zusätzliche Extraschliffe angebracht, um die Forderungen nach einer Reihe von speziellen Abtasteigenschaften zu erfüllen.

Für alle Varianten gilt, dass durch spezielle Formen versucht wurde, auf mehr oder weniger einfache Weise Material zu entfernen, so dass die Nadel bestmöglich der V-förmigen Rillenoberfläche folgen kann. Die rein konische Spitze berührt die V-förmige Rillenoberfläche mit einem relativ grossen Radius. Daher ist die Nadel mit konischer Spitze nicht imstande, sehr schnelle Informationen von der Rillenoberfläche abzutasten. Durch die elliptische Querschnittsform und andere bekannte Schliffvarianten wurden die Nadeln besser geeignet, schnelle Informationen abzutasten.

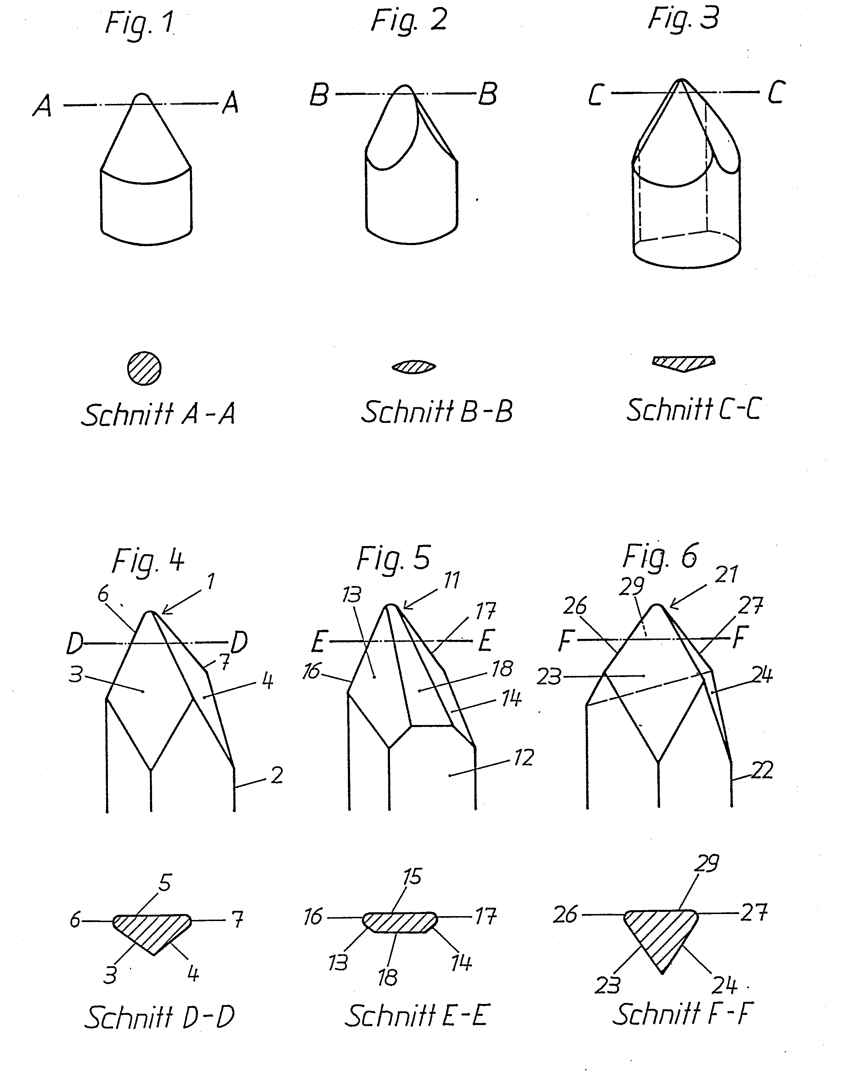

Schallplattentonrillen entstehen durch ein Schneideverfahren, bei dem ein V-förmiger Schneidstichel in eine Lackoberfläche geführt wird. Ein solcher Schneidstichel ist in Fig. 3 gezeigt. Durch Auslenkungen in lateraler Richtung und senkrecht zueinander unter $45°$ zur Plattenoberfläche werden die Informationen in der Rillenoberfläche gebildet.

Der Schneidstichel hat eine Form, die im Querschnitt parallel zur Plattenoberfläche im wesentlichen ein Dreieck bildet. Er unterscheidet sich insofern vom üblichen kreisförmigen oder elliptischen Querschnitt der bekannten Abtastnadeln.

Die Querschnittsform des Schneidstichels ist für Abtastnadeln ungeeignet, weil mit einer derartigen Nadel infolge der scharfen Anschlagkanten die Schallplatte in kürzester Zeit zerstört wäre. Ausserdem würde eine Nadel mit einer dem Schneidstichel entsprechenden Form den "Boden" der Tonrille berühren. Damit wäre sie daran gehindert, den Ausformungen der Seitenflächen der Tonrille zu folgen, die die Information tragen. Zudem würden sich Störungen durch Staub etc. ergeben, der sich unten in der Rille ablagert. Deshalb wurde bisher nicht versucht, die Abtastnadel der Form des Schneidstichels anzunähern, sondern es wurden verbesserte Schliffvarianten immer auf der Basis eines kreisförmigen oder elliptischen Querschnitts entwickelt, um die Oberflächenbelastung durch die Nadel gering zu halten.

Die Abtastqualität mit Nadeln mit kreisförmigem oder elliptischem Querschnitt hat sich aber trotz aller Verbesserungen des Schliffs für hohe Anforderungen als unzureichend gezeigt. Der Erfindung liegt daher die Aufgabe zugrunde, eine Abtastnadel zu entwickeln, die möglichst weitgehend der Form des Schneidstichels entspricht, ohne jedoch beim Abtasten die Rillenoberfläche zu beschädigen.

Erfindungsgemäss wird dies erreicht durch eine Abtastnadel, bei der die Spitze durch mindestens eine ebene oder annähernd ebene Fläche gebildet ist, die bei der Abtastung die Vorderseite der Nadel bildet, und einen gleichschenklig dreieckigen, trapezförmigen oder kreissegmentförmigen Querschnitt aufweist, wobei die die vorderseitige Fläche bewegenden Kanten einen Radius von 3-8 μm aufweisen.

0253769

- 3 -

Nach einer bevorzugten Ausführungsform ist die vorderseitige
Fläche, die im Querschnitt der Grundlinie des gleichschenkligen Dreiecks oder Trapezes, bezw. der Sehne des Kreissegments, entspricht, ebenfalls unter einem Winkel zur Längsachse der Nadel geschliffen, vorzugsweise unter einem Winkel
von ca. 20°.

Gemäss einer weiteren bevorzugten Ausführungsform, liegen
alle Schliffebenen unter gleichem Winkel zur Nadelachse.

Im folgenden werden anhand der beiliegenden Zeichnungen
Ausführungsbeispiele der Erfindung beschrieben. Es zeigen

Fig. 1 die Spitze einer Abtastnadel mit kreisförmigem
Querschnitt (Stand der Technik),

Fig. 2 die Spitze einer Abtastnadel mit elliptischem
Querschnitt (Stand der Technik),

Fig. 3 die Spitze eines Schneidstichels mit typischem
dreieckigem Querschnitt,

Fig. 4 die Spitze einer einfachen Ausführungsform der
Erfindung,

Fig. 5 die Spitze einer Ausführungsform der Erfindung für
höhere Ansprüche an die Abtastqualität,

Fig. 6 die Spitze einer weiteren bevorzugten Ausführungsform
der Erfindung für die einfachere Montage im Nadelträger,

Fig. 7 die Spitze einer gegenüber der Fig. 6 verbesserten
Ausführungsform der Erfindung,

Fig. 8 eine Form der Nadelmontage im Nadelträger,

Fig. 9 eine alternative Form der Montage der Nadeln gemäss den Fig. 6 und 7 am Nadelträger,

Fig. 10 die Spitze einer mit einem einzigen Schliff herstellbaren Ausführungsform der Erfindung,

Fig. 11 die Montage der Nadel gemäss Fig. 10 am Nadelträger und

Fig. 12 die Spitze einer weiteren Ausführungsform der Erfindung auf der Basis einer zylindrischen Nadel.

Wie bereits erwähnt zeigen die Figuren 1 und 2 Nadelspitzen mit kreisförmigem bzw. elliptischem Querschnitt, wie sie dem Stand der Technik angehören. Die Querschnittsformen sind in den Zeichnungen jeweils unter der Seitenansicht dargestellt. Fig. 3 zeigt die Spitze des Schneidstichels und deren Querschnittsform. Die Kanten des Schneidstichels weisen typischerweise Fasen von 2-3 µm Breite auf. Mit diesen Kanten findet Materialabtrag statt, so dass eine Abtastnadel mit derartig scharfen Kanten die Rillenoberfläche beschädigen und die Schallplatte in kürzester Zeit zerstören würde.

Die in Fig. 4 gezeigte Spitze 1 einer Abtastnadel 2 nach der Erfindung ist durch ebene Schliffe 3,4 und durch eine verbleibende Seitenfläche 5 der prismatischen Nadel gebildet. Die verbleibende Seitenfläche 5 ist die in der oberen Figur nicht sichtbare, abgewendete Fläche. Im darunter gezeigten Querschnitt ist die der Seitenfläche 5 entsprechende Dreieckseite sichtbar.

Die Schliffe 3,4 sind symmetrisch zur Nadelachse und zur Seitenfläche 5 angebracht. Auf diese Weise entsteht ein gleichschenkliges Dreieck als Querschnitt. Die Nadel wird in der Weise betrieben, dass die Seitenfläche 5 der Laufrichtung der Plattenrille entgegen gerichtet ist, d.h. also die Vorderseite der Abtastnadel bildet. Es ist aber auch möglich die Nadel umgekehrt einzusetzen derart, dass die Seitenfläche 5 rückwärts gerichtet ist.

Die Kanten 6,7, die die Seitenfläche 5 mit den Schliffen 3,4 bildet, stellen die Abtast- oder Kontaktkanten dar. Sie sind auf einen Radius von 3-8 µm abgerundet und poliert. Auf diese Weise kann das Plattenmaterial den spezifischen Druck ohne ständige Deformation und Materialabtrag während der Abtastung ertragen.

Die Kanten 6 und 7 bilden miteinander einen Winkel zwischen 45° und 88°, vorzugsweise von 70-85°. Die Spitze dieses Winkels ist so abgerundet, dass die Kante eine Kurve bildet, die sich von annähernd einer Geraden bis zu einer stärksten Krümmung stetig zunehmend krümmt, d.h. also beispielsweise eine Parabel, und dass ein Abstand von ca. 5 µm vom Boden der Rille bestehen bleibt. Durch die parabelförmige oder ähnliche Krümmung der Kanten ergibt sich eine optimal lange Abtastlinie. Dies gilt auch für die nachfolgend beschriebenen Ausführungsformen.

Bei der in Fig. 5 gezeigten Spitze 11 einer prismatischen Nadel 12 mit quadratischem Querschnitt sind ebenso wie bei der vorstehend beschriebenen Ausführungsform zwei zu einer verbleibenden Seitenfläche 15 symmetrische Schliffe 13,14 angebracht. Zusätzlich ist weiteres Material durch einen Schliff 18 entfernt, um die in Bewegungsrichtung zeigende Seite der Spitze schlanker zu gestalten. Dies hat Vorteile für den Rillenleerlauf der Nadel.

Wie das Querschnittsbild zeigt, ist der Querschnitt in diesem Fall trapezförmig. Wiederum sind die Kontaktkanten 16,17 auf einen Radius von 3-8 um gerundet und poliert.

Bei der in Fig. 6 gezeigten Spitze 21 einer wiederum prismatischen Nadel 22 mit quadratischem Querschnitt sind zwei Schliffe 23 und 24 symmetrisch zur Nadelachse bzw. zur Bewegungsrichtung angebracht, entsprechend den Schliffen 3 und 4 der in Fig. 4 gezeigten Spitze. Zusätzlich ist auf der Nadelvorderseite ein Schliff 29 unter einem Winkel von 15-30$^{\circ}$ zur Seitenfläche der Nadel angebracht.

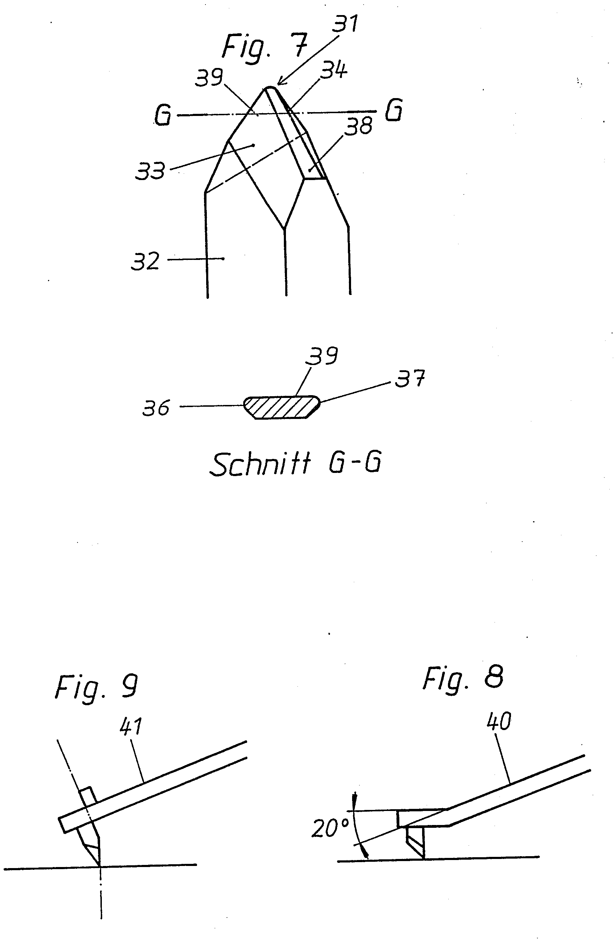

Diese Ausführungsform hat den Vorteil, dass die Nadel rechtwinklig zum Nadelträger 41 auf diesem montiert werden kann, wie dies in Fig. 9 gezeigt ist. Die Nadeln gemäss Fig. 4 und 5 müssen unter einem Winkel von ca. 20$^{\circ}$ am Nadelträger 40 montiert sein, wie Fig. 8 zeigt. Zu diesem Zweck ist eine spezielle Krümmung des Nadelträgers 40 erforderlich.

Die in Fig. 7 gezeigte Ausführungsform einer wiederum prismatischen Nadel 32 besitzt eine Spitze 31, die durch vier Schliffe 33, 34, 38 und 39 gebildet ist. Der vorderseitige Schliff 39 ist unter einem Winkel von 15-30$^{\circ}$ ausgeführt. Diese Spitze 31 hat wieder einen trapezförmigen Querschnitt und eignet sich infolge des vorderseitigen Schliffs 39 zur senkrechten Montage am Nadelträger 44 gemäss Fig. 9. Selbstverständlich muss der Montagewinkel dem Winkel angepasst werden, unter dem die vorderseitige Schliffläche zur Nadelachse liegt.

Für eine rationelle Herstellung ist es vorteilhaft, alle Schliffe unter demselben Winkel zu schleifen. Hierfür kann die Nadel in einer speziellen Halterung um ihre Achse oder eine von dieser verschiedenen Drehachse in vier aufeinanderfolgenden Positionen gedreht werden.

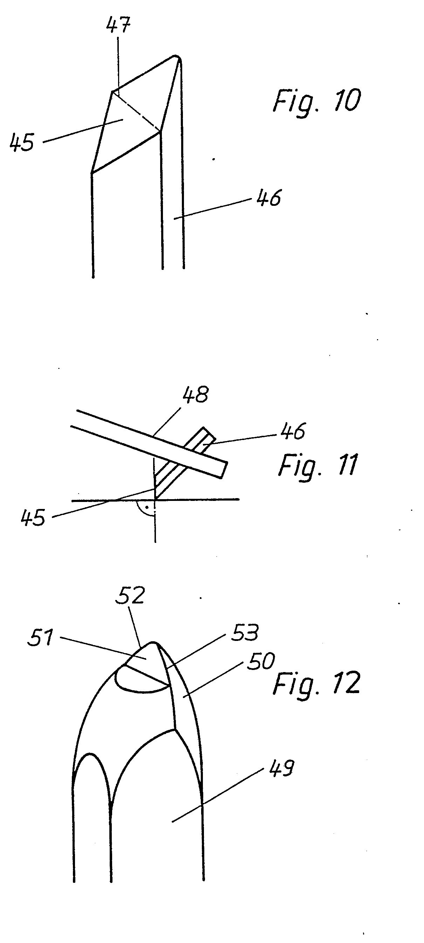

Die in Fig. 10 gezeigte Ausführungsform der Erfindung zeichnet sich dadurch aus, dass die Spitze durch eine einzige

Schlifffläche 45 an einer Nadel 46 mit quadratischem Querschnitt hergestellt wird. Die geschliffene Fläche 45 ist unter einem bestimmten Neigungswinkel von z.B. 45$^{\circ}$ zur Nadelachse geführt derart, dass sie eine Diagonale 47 der Querschnittsfläche der Nadel enthält. Auf diese Weise entsteht ein Parallelogramm als Schnittfläche, dessen Winkel vom gewählten Neigungswinkel abhängen.

Die Montage dieser Nadel am Nadelträger 48 ist in Fig. 11 gezeigt. Der Winkel der vorderseitigen Schlifffläche zur Plattenoberfläche soll wie üblich 90$^{\circ}$ betragen. Der Winkel der Nadel zum Nadelträger hängt vom gewählten Neigungswinkel des Schliffs ab.

In Fig. 12 ist eine Ausführungsform der Erfindung gezeigt, die auf einer Nadel 49 mit einem angeschliffenen Konus 50 mit kreis- oder ellipsenförmigem Querschnitt beruht. Eine ebene oder annähernd ebene Fläche 51 ist dadurch entstanden, dass etwa die Hälfte der Spitze entfernt ist. Die Abtastkanten 52,53 werden durch den Schnitt der Schlifffläche mit der Konusmantelfläche gebildet.

<u>Patentansprüche</u>

1.    Abtastnadel zur Abtastung von stereo- und quadrophonischen Tonrillen von Schallplatten, dadurch gekennzeichnet, dass die Spitze (1, 11, 21, 31) der Abtastnadel (2, 12, 22, 32) durch mindestens eine ebene oder annähernd ebene Fläche (5, 15; 29, 39) gebildet ist, die bei der Abtastung die Vorderseite der Nadel bildet, und einen gleichschenklig dreieckigen, trapezförmigen oder kreissegmentförmigen Querschnitt aufweist, wobei die Abtastkanten (6, 7; 16, 17; 26, 27; 36, 37) einen Radius von 3-8 µm aufweisen.

2.    Abtastnadel nach Anspruch 1, dadurch gekennzeichnet, dass die Nadel prismatisch mit quadratischem Querschnitt ist und eine der die Spitze bildenden Flächen eine Seitenfläche (5, 25) der Nadel ist, die mit schräg zur Nadelachse angebrachten Schliffen (3, 4; 23, 24) Abtastkanten (6, 7; 26, 27) bildet, wobei die Seitenfläche die Nadelvorderseite in Bezug auf die Abtastrichtung bildet.

3.    Abtastnadel nach Anspruch 1, dadurch gekennzeichnet, dass die Spitze durch vier Schliffe gebildet ist, wobei der der Grundlinie der Querschnittsfläche entsprechende Schliff die Nadelvorderseite definiert.

Fig. 1

A —— A

Schnitt A - A

Fig. 2

B —— B

Schnitt B - B

Fig. 3

C —— C

Schnitt C - C

Fig. 4

6

1

D —— D

3

7

4

2

5

6 —— 7

3  4

Schnitt D - D

Fig. 5

13

11

17

E —— E

16

18

14

12

15

16 —— 17

13  18  14

Schnitt E - E

Fig. 6

26

29

21

27

F —— F

23

24

22

29

26 —— 27

23  24

Schnitt F - F

Fig. 7

31

39

34

G —————— G

33

38

32

Schnitt G-G

39

36          37

Fig. 9

41

Fig. 8

40

20°

*Fig. 10*

*Fig. 11*

*Fig. 12*